Europäisches Patentamt

European Patent Office

Office européen des brevets

(19)

(11) Veröffentlichungsnummer : **0 084 786**
**B1**

(12) # EUROPÄISCHE PATENTSCHRIFT

(45) Veröffentlichungstag der Patentschrift :
06.05.87

(51) Int. Cl.⁴ : **C 10 B 39/02, F 22 B   1/04**

(21) Anmeldenummer : 83100119.3

(22) Anmeldetag : 08.01.83

(54) Anordnung von Kühlschacht, Abscheider und Abhitzekessel einer Kokstrockenkühlanlage.

(30) Priorität : 27.01.82 DE 3202573

(43) Veröffentlichungstag der Anmeldung :
03.08.83 Patentblatt 83/31

(45) Bekanntmachung des Hinweises auf die Patenterteilung : 06.05.87 Patentblatt 87/19

(84) Benannte Vertragsstaaten :
**AT BE DE FR GB IT LU NL SE**

(56) Entgegenhaltungen :
DE-A- 3 013 351
DE-C-   493 790
FR-A-   633 997
FR-A- 1 200 305

(73) Patentinhaber : **Krupp Koppers GmbH**
**Altendorfer Strasse 120**
**D-4300 Essen 1 (DE)**

**WAAGNER-BIRO AKTIENGESELLSCHAFT**
**Stadlauer-Strasse 54**
**A-1221 Wien (AT)**

(72) Erfinder : **Schmid, Karl, Dr. Dipl.-Chem.**
**Hohe Buchen 14**
**D-4300 Essen 1 (DE)**
Erfinder : **Jokisch, Friedrich, Dr. Dipl.-Ing.**
**Henricistrasse 71**
**D-4300 Essen 1 (DE)**
Erfinder : **Heese, Dieter H. W., Dr. Dipl.-Phys.**
**Am Dieckmannshof 19**
**D-4630 Bochum (DE)**
Erfinder : **Hillinger, Bruno, Dr.**
**Dreisteingasse 20**
**A-2371 Hinterbrühl (AT)**
Erfinder : **Beckmann, Georg, Dr.**
**Jacquingasse 55/10**
**A-1030 Wien (AT)**
Erfinder : **Heger, Norbert, Dipl.-Ing.**
**Wehrgasse 11a/7**
**A-1050 Wien (AT)**

(74) Vertreter : **Hattwig, Henning, Dr.**
**Krupp-Koppers GmbH Patentabteilung Altendorfer**
**Strasse 120 Postfach 10 22 51**
**D-4300 Essen 1 (DE)**

## Beschreibung

Anordnung von Kühlschacht, Abscheider und Abhitzekessel einer Kokstrockenkühlanlage.

Die Erfindung betrifft die Anordnung von Kühlschacht, Abscheider und Abhitzekessel zur Entstaubung und Kühlung von zur trockenen Kokskühlung verwendetem, im Kreislauf geführtem Kühlgas.

Bei der trockenen Kokskühlung wird normalerweise der von oben in den Kühlschacht eingeleitete heiße Koks im Gegenstrom mit dem im Kühlschacht von unten nach oben aufsteigenden Kühlgas behandelt. Dabei ist es praktisch unvermeidlich, daß das Kühlgas beim Durchströmen des heißen Kokses Koksstaubpartikel mitreißt. Da in der Regel das Kühlgas zur Wärmeabgabe einen Abhitzekessel durchströmt, ist es vorteilhaft, das Kühlgas vor Eintritt in den Kessel zu entstauben. Würde man keine Entstaubung vorsehen, so würde sich der Staub im Kessel niederschlagen, was zu Verschleiß, Verstopfungen und schlechteren Wärmeaustauschverhältnissen führen würde.

Es ist deshalb bereits bekannt, das aus dem Kühlschacht austretende heiße Kühlgas einer Entstaubung durch Prallabscheider, Schwerkraftabscheider oder Zyklone zu unterwerfen. Eine derartige Arbeitsweise wird beispielsweise in der DE-A-24 55 496 beschrieben.

Die Entstaubungsaggregate sind dabei vom Kessel räumlich getrennt vor dem Kessel angeordnet, was einerseits zu einem vergrößerten Platzbedarf der Gesamtanlage führt, insbesondere bei Schwerkraftabscheidern. Andererseits werden bei den bekannten Anordnungen der Prallabscheider die Abscheidegrade dadurch ungünstig beeinflußt, daß das aus dem Gasstrom auszutragende, nach unten fallende Gut vom Gasstrom durchquert und erneut mitgerissen wird. Und schließlich ist der Einsatz von Zyklonen bei dem heißen Kühlgas (ca. 800 °C) durch die großen Gasvolumina (ca. 1 500 m³/t Koks, m³ bei 0 °C und 1,013 bar) aus wirtschaftlichen Gesichtspunkten begrenzt.

Der Erfindung liegt deshalb die Aufgabe zugrunde, durch eine geeignete Anordnung von Kühlschacht, Abscheider und Abhitzekessel eine raumsparende Bauweise zu erzielen und durch eine Kühlgasführung, die die Durchquerung des abgeschiedenen Feststoffstromes vermeidet, den Abscheidegrad des Abscheiders zu optimieren.

Erfindungsgemäß wird hierzu vorgeschlagen, daß am Kühlschacht zwei Austrittskanäle für das heiße Kühlgas vorgesehen sind, die zu zwei beiderseits des Abhitzekessels angeordneten Abscheidern führen, wobei der Eintritt des Kühlgases aus den Abscheidern in den Abhitzekessel im wesentlichen senkrecht zur Fallbewegung des in den Abscheidern abgetrennten Gutes verläuft.

Schließlich können nach einem weiteren Vorschlag der Erfindung die Abscheider am Abhitzekessel angebaut und von Kühlwänden des Abhitzekessels gebildet sein.

Die Erfindung wird im folgenden an Hand der Zeichnungen, die beispielsweise Ausführungsformen zeigen, näher erläutert. Darin sind Fig. 1 eine Seitenansicht der erfindungsgemäßen Anordnung, Fig. 2 eine Draufsicht auf diese Anordnung, Fig. 3 eine Frontansicht einer anderen Anordnung von Abscheider und Abhitzekessel und Fig. 4 eine Seitenansicht dieser Anordnung.

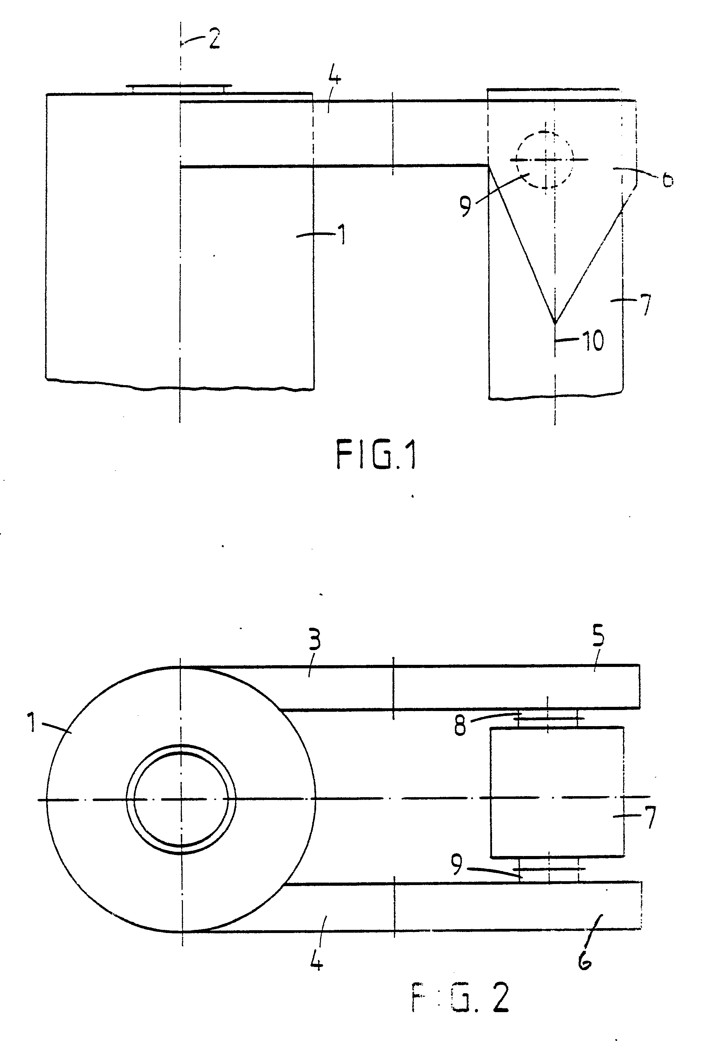

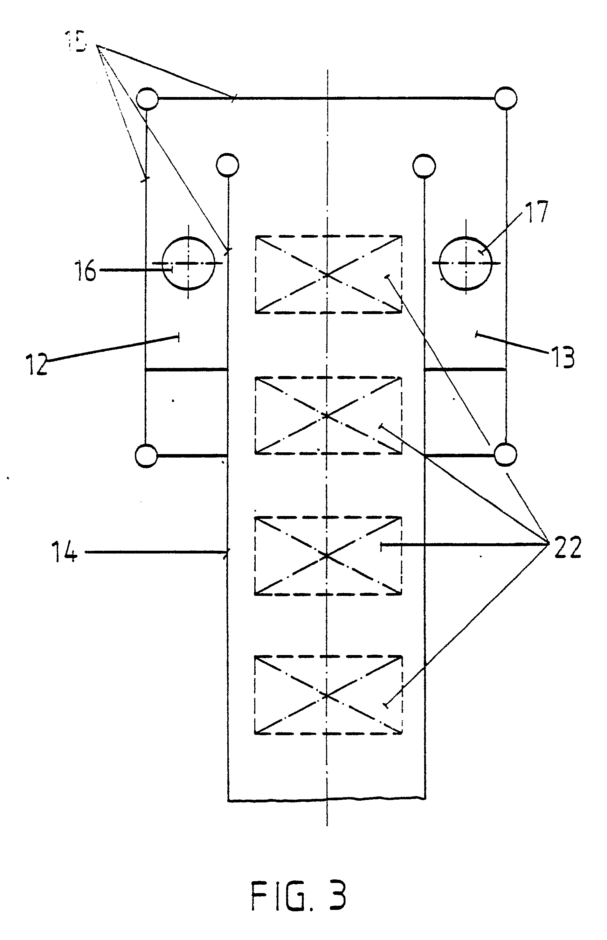

Mit 1 ist in Fig. 1 und 2 der Kühlschacht bezeichnet, dem bei 2 der heiße Koks zugeführt wird und in dem der Koks im Gegenstrom mit von unten nach oben strömendem Kühlgas beaufschlagt wird. Dieses Kühlgas verläßt den Kühlschacht an seinem oberen Ende durch zwei Austrittskanäle 3 und 4, die zu zwei im vorliegendem Fall als Prallabscheider ausgebildete Abscheider 5 und 6 führen. Die Abscheider sind beiderseits des Abhitzekessels 7 angeordnet, mit dem sie durch die Anschlüsse 8 und 9 verbunden sind.

Bei der erfindungsgemäßen Anordnung strömt das Kühlgas durch die Kanäle 3 und 4 in die Abscheider 5 und 6 ein und von dort unter rechtwinkliger Ablenkung in den Abhitzekessel. Die in dem Kühlgas enthaltenen Kokspartikel werden infolge dieser Ablenkung zum großen Teil aus dem Kühlgas ausgeschleudert und prallen gegen die in Strömungsrichtung gesehen hintere Wand der Abscheider. Von dort sinken sie abwärts und werden am unteren Ende der Abscheider bei 10 ausgetragen. Der Weg des Kühlgases aus den Abscheidern in den Abhitzekessel verläuft somit im wesentlichen senkrecht zur Bewegung der abgetrennten Kokspartikel. Letztere werden daher bei dieser Anordnung nicht erneut vom Kühlgas durchströmt, wie es bei den eingangs erwähnten bekannten Anordnungen der Fall ist.

Ein weiterer Vorteil der erfindungsgemäßen Anordnung ist der, daß vom Abscheider nicht der Raum zwischen Kühlschacht und Abhitzekessel beansprucht wird, sondern daß die beiden vorgeschlagenen Abscheider seitliche Leerräume ausfüllen, die durch die geringeren Abmessungen des Abhitzekessels gegenüber dem Kühlschacht gegeben sind.

Statt der in der dargestellten Ausführungsform vorgesehenen Prallabscheider können auch Zyklone zum Einsatz kommen.

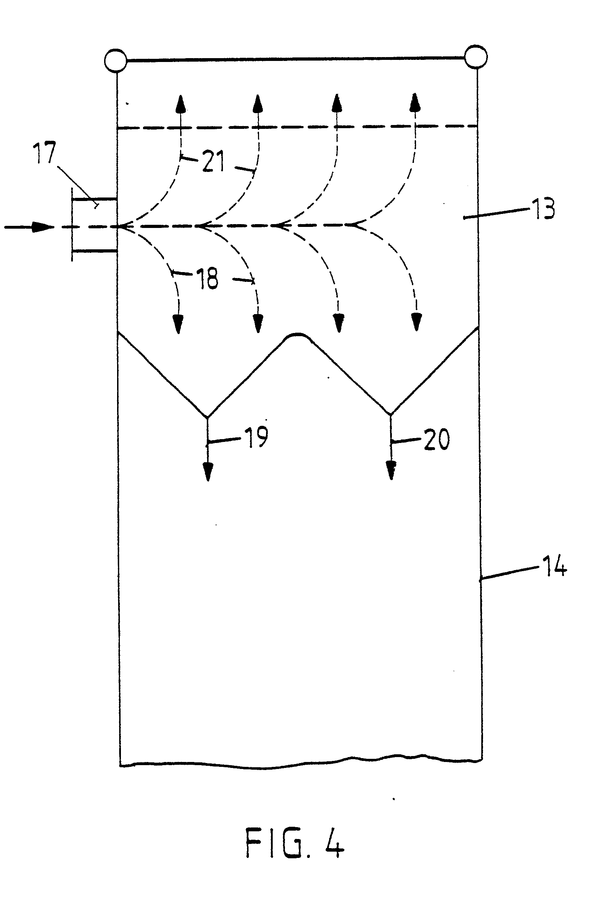

Bei der Anordnung nach Fig. 3 und 4 sind die Abscheider 12 und 13 direkt an den Abhitzekessel 14 angebaut, d. h. sie werden von den Wänden 15 des Kessels gebildet. Die Kühlgaseintritte in die Abscheider sind mit 16 und 17 bezeichnet. Die Pfeile 18 veranschaulichen den Ausfall der Kokspartikel aus dem Gas, die bei 19 bzw. 20 aus dem Abscheider abgezogen werden. Das Kühlgas selbst gelangt aufwärtsströmend (Pfeile 21) in den Abhitzekessel. Mit 22 sind noch die Rohrbündel des Abhitzekessels angedeutet.

## Patentansprüche

1. Anordnung von Kühlschacht, Abscheider und Abhitzekessel zur Entstaubung und Kühlung von zur trockenen Kokskühlung verwendetem, im Kreislauf geführten Külgas, dadurch gekennzeichnet, daß am Kühlschacht (1) zwei Austrittskanäle (3, 4) für das heiße Kühlgas vorgesehen sind, die zu zwei beiderseits des Abhitzekessels (7, 14) angeordneten Abscheidern (5, 6, 12, 13) führen, wobei der Eintritt des Kühlgases aus den Abscheidern (5, 6, 12, 13) in den Abhitzekessel (7, 14) im wesentlichen senkrecht zur Fallbewegung des in den Abscheidern abgetrennten Gutes verläuft.

2. Anordnung nach Anspruch 1, dadurch gekennzeichnet, daß die Abscheider (12, 13) am Abhitzekessel (14) angebaut und von Kühlwanden (15) des Abhitzekessels gebildet sind.

**Claims**

1. Arrangement of cooling shaft, separator and waste-heat boiler for the purpose of dedusting and cooling a cooling gas which is used for the dry-cooling of coke, this gas being circulated, characterized in that two outlet ducts (3, 4), for the hot cooling gas, are provided on the cooling shaft (1), these ducts leading to two separators (5, 6, 12, 13) which are located on each side of the waste-heat boiler (7, 14), whereby the entry of the cooling gas from the separators (5, 6, 12, 13), into the waste-heat boiler (7, 14), runs essentially normal to the falling movement of the material which is separated-off in the separators.

2. Arrangement according to Claim 1, characterised in that the separators (12, 13) are built onto the waste-heat boiler (14) and are formed by cooling walls (15) of the waste-heat boiler.

**Revendications**

1. Agencement de la cuve de refroidissement, du séparateur et de la chaudière à chaleurs perdues servant au dépoussiérage et au refroidissement d'un gaz de refroidissement mis en circulation qui est utilisé pour le refroidissement à sec du coke, caractérisé par le fait qu'il est prévu, sur la cuve (1) de refroidissement, deux canaux (3, 4) de sortie pour le gaz de refroidissement chaud, qui conduisent à deux séparateurs (5, 6, 12, 13) disposés des deux côtés de la chaudière (7, 14) à chaleurs perdues, l'entrée dans ladite chaudière (7, 14) du gaz de refroidissement provenant des séparateurs (5, 6, 12, 13) s'étendant sensiblement perpendiculairement au trajet de chute de la matière séparée dans les séparateurs.

2. Agencement selon la revendication 1, caractérisé par le fait que les séparateurs (12, 13) sont montés sur la chaudière (14) à chaleurs perdues et qu'ils sont formés par les parois de refroidissement (15) de la chaudière à chaleurs perdues.

FIG.1

F I G. 2

FIG. 3

FIG. 4